(19) Europäisches Patentamt
European Patent Office
Office européen des brevets

(11) Veröffentlichungsnummer: **0 115 011**
**B1**

(12) # EUROPÄISCHE PATENTSCHRIFT

(45) Veröffentlichungstag der Patentschrift: **26.02.86**

(51) Int. Cl.⁴: **C 07 F 9/52**

(21) Anmeldenummer: **83112744.4**

(22) Anmeldetag: **17.12.83**

(54) **Verfahren zur Herstellung von Aryldichlorphosphanen.**

(30) Priorität: **29.12.82 DE 3248483**

(43) Veröffentlichungstag der Anmeldung:
**08.08.84 Patentblatt 84/32**

(45) Bekanntmachung des Hinweises auf die Patenterteilung:
**26.02.86 Patentblatt 86/9**

(84) Benannte Vertragsstaaten:
**AT BE CH DE FR GB IT LI NL**

(56) Entgegenhaltungen:
**FR - A - 1 450 681**
**SU - A - 172 322**
**US - A - 2 986 579**
**US - A - 3 829 479**

(73) Patentinhaber: **HOECHST AKTIENGESELLSCHAFT, Postfach 80 03 20, D-6230 Frankfurt am Main 80 (DE)**

(72) Erfinder: **Neumaier, Hubert, Dr., Breslauer Strasse 76, D-5040 Brühl (DE)**

**EP 0 115 011 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aryldichlorphosphane sind wichtige technische Zwischenprodukte zur Herstellung phosphororganischer Verbindungen, die beispielsweise als Insektizide, Antioxidantien, Katalysatoren und Stabilisatoren Verwendung finden.

Aus Houben-Weyl, Methoden der Organischen Chemie, 4. Auflage, Bd. XII/1, Seiten 313 - 316, ist es bekannt, Arylverbindungen unter milden Bedingungen mit überschüssigem phosphor(III)-chlorid bei dessen Siedepunkt in Gegenwart von wasserfreiem Aluminiumchlorid umzusetzen und anschlie-ßend aus dem gebildeten Aryldichlorphosphan-Aluminiumchloridkomplex das Aryldichlorphosphan in Freiheit zu setzen. Die Methode ist nicht auf die Gewinnung von phenyl-dichlorphosphan beschränkt, sondern es lassen sich auf diesem Wege auch am Kern substituierte Aryldichlorphosphane herstellen. Gemäß dem Stand der Technik muß mindestens ein Mol Aluminiumchlorid je Mol Arylverbindung aufgewendet werden, da sich zunächst ein Aryldichlorphosphan-Aluminiumchlorid-Komplex bildet (Gleichung A),

$$RH + PCl_3 + AlCl_3 \xrightarrow{-HCl} RPCl_2 \cdot AlCl_3 \qquad (A)$$

der nach Beendigung der Reaktion beispielsweise mit phosphoroxidchlorid unter Bildung eines kristallinen phosphoroxidchlorid-Aluminiumchlorid-Komplexes gespalten wird (Gleichung B).

$$RPCl_2 \cdot AlCl_3 + POCl_3 \longrightarrow RPCl_2 + POCl_3 \cdot AlCl_3 \quad (B)$$

Nach der Filtration wird das Filtrat in üblicher Weise destillativ unter Gewinnung des Aryldichlorphosphans aufgearbeitet.

Anstelle von Phosphoroxidchlorid findet auch Pyridn oder er zur Komplexspaltung Verwendung.

Ein Nachteil des Verfahrers ist der Anfall iner ziemlich großen Menge Nebenprodukt (Gleichun B) eingesetzten Aluminiumchlorid und der zu dessen Komplexierung verwendeten Substanz bildet. Beispielsweise errechnen sich nach F.M. Kharasova et al, Zh.0bshch.Khim. 37 902 (1967) bei einer Ausbeute von 80 %, ber. auf Benzol, für 86 g Phenyl-dichlor-phosphan 230 g Nebenprodukt in Form des Phosphoroxidchlorid-Aluminiumchlorid-Komplexes mit übershüssigem $AlCl_3$ bzw. je 1 kg Phenyl-dichlor-phosphan etwa 2,7 kg.Nebenprodukt. Die Beseitigung des Nebenprodukts kann entweder nach Hydrolyse und Neutralisation über das Abwasser oder durch Einlagerung in fester Form in einer Deponie erfolgen. In beiden Fällen stellt das Nebenprodukt eine groß Umweltbelastung dar.

Aufgabe vorliegender Erfindung ist deshalb ein Verfahren zur Herstellung von Aryldichlorphosphanen mit erheblich verringertem Anfall an Nebenprodukten.

Die Erfindung betrifft ein Verfahren zur Herstellung von Aryl-dichlor-phosphanen der allgemeinen Formel

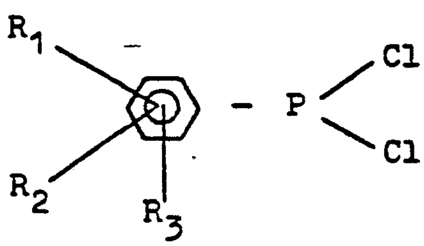

worin $R_1$, $R_2$ und $R_3$ gleich oder verschieden sind und ein Wasserstoffatom, eine Alkylgruppe mit 1-8 C-Atomen, ein Halogenatom, eine Arylgruppe oder eine Aryloxygruppe bedeuten durch Umsetzung eines Arens der allgemeinen Formel

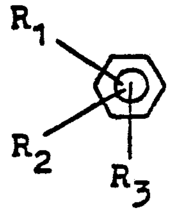

worin $R_1$, $R_2$ und $R_3$ die obige Bedeutung haben mit mindestens 4 mol Phosphor(III)-chlorid je Mol Aren in Gegenwart von Aluminiumchlorid durch mehrstündiges Rochen der Mischung und nachfolgends Ausfällung des Aluminiumchlorids durch Zugabe eines Komplexierungsmittels, Filtrasion und destillative Aufarbeitung des Filtrats, welches dadurch gekennzeichnet ist, daß man 0,05 bis 0,9 mol Aluminiumchlorid je mol Aren und 1-3 mol feinkemahlenes Alkalichlorid als Komplexierungsmittel je mol Aluminiumchlorid einsetzt. Als Alkalichlorid dient bevorzugt das Natrium- oder Kaliumchlorid.

Das feingemahlene Alkalichlorid wird bevorzugt in einer Korn-größe $< 0{,}25$ mm, insbesondere $< 0{,}08$ mm, eingesetzt. Bevorzugt sind weiterhin Mengenverhältnisse von 0,05 bis 0,7 mol $AlCl_3$ je mol Aren und von 1,1 bis 2,0 mol NaCl oder KCl je mol $AlCl_3$.

Als Arene werden bevorzugt Benzol, ein- oder mehrfach alkylierte Benzole mit Alkylgruppen von 1-5 C-Atomen, beispielsweise Toluol, Ethylbenzol, Xylole, ein- oder mehrfach halogenierte Benzole, beispielsweise Fluorbenzol, Chlorbenzol, Brombenzol, Dichlorbenzole oder Dihalogenbenzole mit unterschiedlichen Halogenatomen wie Chlorfluorbenzol, oder ein aryliertes Benzol, beispielsweise Biphenyl, eingesetzt.

Es ist überraschend, daß hierbei hervorragende Ausbeuten, in der Regel deutlich mehr als 1 mol Aryldichlorphosphan je mol eingesetztes Aluminiumchlorid, erzielt werden. Im angehefteten Diagramm ist für die Herstellung von Phenyl-dichlorphosphan die Ausbeute in mol/mol Aluminiumchlorid für unterschiedliche Einsatzmolverhältnisse Benzol : Aluminiumchlorid aufgezeigt.

Dies war völlig unerwartet, da nach der bisherigen Lehre wegen der Bildung des Phenyl-dichlorphosphan/Aluminiumchlorid-Komplexes, $C_6H\ _5PCl_2$. $AlCl_3$, siehe Gleichung A, theoretisch höchstens 1 mol Phenyldichlorphosphan je mol Aluminiumchlorid entstehen sollte.

Phosphor(III)-chlorid wird bei dem erfindungsgemäßen Verfahren im 4- bis vorzugsweise 12-fachen molaren Verhältnis zum Aren eingesetzt, wobei der Überschuß als Lösungsmittel anzusehen ist. Ein hoher Überschuß drängt die Bildung von Nebenprodukten bei der Reaktion zurück und erleichtert die nachfolgende Ausfällung des Aluminiumchlorids als Alkalitetrachloroaluminat-Komplex.

Nach dem erfindungsgemäßen Verfahren wird das Aluminiumchlorid, das nach der Reaktion in Form eines Aryldichlorphosphan/ Aluminiumchlorid-Komplexes vorliegt, aus der Reaktionslösung mit feingemahlenem Alkalichlorid als Alkalitetrachloroaluminat ausgefällt. Verwendet wird ein gemahlenes Alkalichlorid, welches ein Sieb mit einer Maschenweite von 0,25 mm, bevorzugt von 0,08 mm passiert.

Durch die beschriebenen Maßnahmen läß sich gegenüber den bisher bekannten Verfahren eine erhebliche Verminderung der Menge an Nebenprodukten je Gewichtseinheit Aryldichlorphosphan erzielen. Dies führt zu einer Kosteneinsparung einerseits beim Materialeinsatz, andererseits bei der Beseitigung des Nebenprodukts und trägt zudem zur Verringerung der Umweltprobleme bei.

Das erfindungsgemäße Verfahren kann im einzelnen so durchgefürt werden, daß man in einem Rückflußkühler Aren, Phosphor(III)-chlorid und Aluminiumchlorid mehrere Stunden unter Rückfluß erhitzt, wobei Aluminiumchlorid in Lösun geht. Die Siedetemperatur wird weitgehend vom überschüssigen Phosphor(III)-chlorid bestimmt und liegt bei 74 - 76°C. Der bei der Reaktion gebildete Chlorwasserstoff kann in einen nachgeschalteten Waschturm geleitet werden. Die Reaktionszeit hängt von der Reaktionsfähigkeit des eingesetzten Arens ab und beträgt bevorzugt 4 - 12 Stunden. Rürzere Reaktionszeiten liefern geringere Ausbeuten, längere Reaktionszeiten fördern die Bildung undestillierbarer Nebenprodukte. Nach Bendigung der Reaktion kann die erforderliche Menge gemahlenen Alkalichlorids entweder portionsweise als Pulver oder kontinuierlich mittels einer Dosierschnecke oder in Form einer Suspension in Phosphor(III)-chlorid innerhalb von 15 - 30 Minuten in das unter Rückfluß siedende Gemisch eindosiert werden. Hierbei fällt Alkalitetrachloroaluminat in kristalliner, gut filtrierbarer Form aus. Nach einer Nachreaktionszeit von 0,5 - 1 Stunde wird auf 20 - 25°C gekűt und das Alkalitetrachloroaluminat zusammen mit überschüssigem Alkalichlorid über eine Nutsche, vorzugsweise mittels einer Zentrifuge, abgetrennt und mit phosphor(III)chlorid gewaschen. Aus den Filtraten wird in üblicher Weise durch Destillation überschüssiges Phosphor(III)-chlorid und Aren abgetrennt. Diese werden nach Ergänzung der verbrauchten Mengen dem nächsten Ansatz zugefűt, so daß in Bezug auf diese beiden Reaktionskomponenten gleichfalls eine hohe Ausbeute gewährleistet ist. Aus dem Destillationsrückstand erhält man reines Aryldichlorphosphan durch Vakuumdestillation.

Die Erfindung wird nachstehend durch Beispiele näher erläutert:

**Beispiel 1 (Vergleichsbeispiel**

In einem Rührreaktor mit RückflußDkühler werden 8800 g (64 mol) Phosphor(III)-chlorid, 780 g (10 mol) Benzol und 1361 98%iges (10 mol) wasserfreies Aluminiumchlorid 5 Stunden unter Rückfluß erhitzt. Anschließend werden innerhalb von 30 min 1535 g (10 mol) Phosphoroxidchlorid eingetropft.Nach 30 min Nachreaktionszeit wird auf 25° abgekühlt und der gebildete Aluminiumchlorid/Phosphoroxidchlorid-Komplex abfiltriert und mit Phosphor(III)-chlorid gewaschen. Es fallen 3128 g $PCl_3$ feuchtes Kristallisat an (theoretisch: 1535 g $POCl_3$ + 1361 g $AlCl_3$ = 2896 g). Aus dem Filtrat werden unter Normaldruck das überschüssige Phosphor(III)-chlorid zusammen mit nichtumgesetztem Benzol abgetrieben und der Rückstand i.Vak. destilliert. Man erhält 1561 g Phenyl-dichlor-phosphan (Sdp.: 95° C bei 25 mbar). Ausbeute: 0,87 mol $C_6H_5PCl_2$ je 1 mol $AlCl_3$.

**Beispiel 2**

In einem Rührreaktor mit Rückflußkühler werden 8800 g (64 mol) Phosphor(III)-chlorid, 780 g (10 mol) Benzol und 680 g (5 mol) wesserfreies Aluminiumchlorid (98%ig) 5 Stunden unter Rückfluß (75° C) erhitzt. Vor Ablauf der Reaktionszeit wird durch eine geeignete Vorrichtung am Fuße des Rückflußkühlers 1 l Kondensat entnommen und darin 497 g (8,5 mol) feingemahlenes Natriumchlorid mit einer Korngröße <0,08 mm unter Rühren suspendiert. Die Suspension wird anschließend innerhalb von 30 min in das siedende Reaktiosgenisch eindosiert, wobei Natriumtetrachloroaluminat in kristalliner und gut filtrierbarer Form ausfällt. Während 30 min Nachrühren unter Rückfluß wird 1 l Kondensat aus dem Rückflußkühler entnommen und als Waschflüssigkeit für die nachfolgende Operation bereitgestellt. Nach Abkühlen des Reaktionsgemisches auf 20 - 25° C wird das Salzgemisch mittels einer Schälzentrifuge abgetrennt und mit dem bereitgestellten Kondensat gewaschen. Es fallen 1225 g Salzgemisch ($PCl_3$-feucht) an (theoretisch: 680 g $AlCl_3$ + 497 g NaCl = 1177 g). Aus dem Filtrat werden unter Normaldruck Überschüssiges Phosphor(III)-chlorid zusammen mit nicht umgesetztem Benzol abdestilliert und nach Ergänzung der verbrauchten Mengen den nächsten Ansatz zugefürt. Das zurückbleibende Rohprodukt wird i.Vak. destilliert, wobei 1250 g reines Phenyl-dichlor-phosphan anfallen (Sdp.: 95° bei 25 mbar). Ausbeute: 1,4 mol $C_6H_5PCl_2$ je 1 mol $AlCl_3$.

**Beispiele 3 - 6**

Man verfährt gemäß Beispiel 2 mit der Änderung daß jeweils andere Mengen Phosphor(III)-chlorid, Benzol, Aluminiumchlorid und Natriumchlorid eingesetzt werden. Die Einsatzmengen und Ausbeuten sind in der nachfolgenden Tabelle aufgefürt, die zusätzlich die Werte für Beispiel 2 und das Vergleichsbeispiel 7 enthält.

**Beispiel 7 (Vergleichsbeispiel)**

112,5 g (7 mol) Chlorbenzol, 1100 g (8 mol) Phosphor(III)chlorid und 136,2 g (1 mol) 98%iges Aluminiumchlorid werden 12 Stunden unter Rüfluß erhitzt. Anschließend werden 87,8 g (1,5 mol) Natriumchlorid (Korngröße <0,08 mm) in 200 ml Phosphor(III)-chlorid als Suspension eingetropft und das Reaktionsgemisch 30 min unter Rückfluß erhitzt. Nach Abküllung auf 20° C wird filtiriert und das Filtrat wie in beispiel 2 angegeben aufgearbeitet. Man erhält bei 85-88 ° C/1,3 mbar 153,7 g Chlorphenyldichlorphosphan als Isomerengemisch. Ausbeute: 0,72 mol $ClC_6H_4$-$PCl_2$ je 1 mol $AlCl_3$.

**Beispiel 8**

Man verfährt gemäß Beispiel 7 mit der Anderung, daß nur 68,1 g (0,5 mol) 98%iges Aluminiunchlorid und 44 g (0,75 mol) Natriumchlorid eingesetzt werden. Man erhält 110 g Chlorphenyl-dichlorphosphan als Isomerengemisch ($^{31}$P-NMR: 91,3 % para 1,3 % meta 7,4 % o Ausbeute: 1,03 mol $ClC_6H_4$-$PCl_2$ je 1 mol $AlCl_3$

**Beispiel 9 (Vergleichsbeismiel)**

92,1 g (1 mol) Toluol, 1100 g (8 mol) Phosphor(III)-chlorid und 136,2 g (1 mol) 98%iges Aluminiumchlorid werden 4 Stunden und Rückfluß erhitzt. Anschließend werden 87,8 g (1,5 mol) Natriumchlorid (Korngröße < 0,08 mm) in 200 ml EhosphoT(III)-chlorid als Suspension eingetropft und das Reaktionsgelisch 30 min und Rückfluß erhitzt.

Nach Abkühlen auf 20° C wird filtriert und das Filtrat wie in Beispiel 2 beschrieben aufgearbeitet. Man erhält bei 88 - 91° C/2,7 mbar 153 g Toluyl-dichlorphosphan als Isomerengemisch. Ausbeute: 0,79 mol $CH_3C_6H_4\text{-}PCl_2$ je 1 mol $AlCl_3$

**Beispiel 10**

Man verfährt gemäß Beispiel 9 mit der Änderung,, daß nur 68,1 g (0,5 mol) 98%iges Aluminiunchlorid und 44 g (0,75 mol) Natriumchlorid eingesetzt werden. Man erhält 115,8 g Toluyl-dichlor-phosphan als Isomerengemisch ($^{31}$-P-NMR: 59,2 % para; 37,4 % meta; 3,4 % ortho). Ausbeute: 1,2 mol $CH_3C_6H_4\text{-}PCl_2$ je 1 mol $AlCl_3$.

**Patentansprüche:**

1. Verfahren zur Herstellung von Aryl-dichlor-phosphanen der allgeneinen Formel

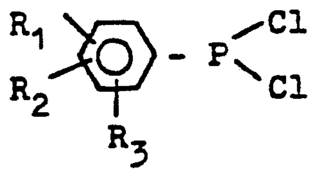

worin $R_1$, $R_2$ und $R_3$ gleich oder verschieden sind und ein Wasserstoffatom, eine Alkylgruppe mit 1-8 C-Atomen, ein Halogenatom, eine Arylgruppe oder eine Aryloxygruppe bedeuten, durch Umsetzung eines Arens der allgemeinen Formel

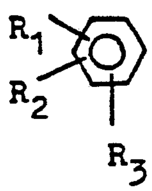

worin $R_1$, $R_2$ und $R_3$ die obige Bedeutung haben, mit mindestens 4 mol Phosphor(III)-chlorid je mol Aren in Gegenwart von Aluminiumchlorid durch mehrstündiges Kochen der Mischung und nachfolgende Ausfällung des Aluminiumchlkorids durch Zugabe eines Komplexierungsmittels, Filtration und destillative Aufarbeitung des Filtrats, dadurch gekennenzeichnet, daß man 0,05 bis 0,9 mol Aluminiumchlorid je mol Aren und 1-3 mol feingemahlenes Alkalichlorid als Komplexierungsmittel je mol Aluminiumchlorid einsetzt.

2. Verfahren nach Anspruch.l, dadurch gekennzeichnet, daß man feingemahlenes Alkalichlorid einer Korngröße < 0,25 mm, bevorzugt < 0,08 mm, einsetzt.

**Claims**

1. Process for making aryldichlorophosphanes of the general formula

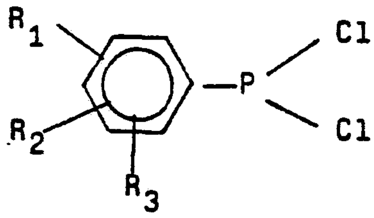

in which $R_1$, $R_2$ and $R_3$ being identical or different each stand for a hydrogen atom, an alkyl group having from 1 to 8 carbon atoms, a halogen atom, an aryl group or an aryloxy group by reacting an arene of the general formula

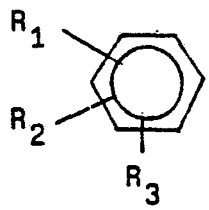

in which $R_1$, $R_2$ and $R_3$ have the meanings given above, with at least 4 mols phosphorus(III) chloride per mol arene in the presence of aluminum chloride by boiling the mixture over a period of several hours and subsequently precipitating the aluminum chloride by adding a complexing agent, filtering and distillatively working up the filtrate, which comprises: using a.05 to 0.9 mol aluminum chloride per mol arene and l-3 mols finely ground alkali metal chloride as the complexing agent per mol aluminum chloride.

2. Process as claimed in claim 1, wherein the finely ground alkali metal chloride is usad in the form of particles having a size of less than 0.25 mm, preferably less than 0.08 mm.

**Revendications**

1. Procédé de préparation d'aryldichlorophosphanes de formule générale

FIG09/45mm

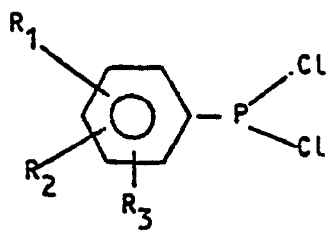

dans laquelle $R_1$, $R_2$ et $R_3$, pouvant être identiques ou différents, représentent chacun un atome d'hydrogène, un groupe alkyle en $C_1$-$C_8$, un atome d'halogène, un groupe aryle ou un groupe aryloxy par réaction d'un arène de formule générale

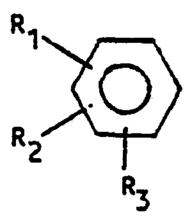

dans laquelle $R_1$, $R_2$ et $R_3$ ont la signification déjà donnée, avec au moins 4 moles de chlorure de phosphore (III) par mole d'arène en présence de chlorure d'aluminium par ébullition du mélange pendant plusieurs heures et précipitation subséquente du chlorure d'aluminium par addition d'un complexant, filtration et traitement complémentaire du filtrat par distillation, caractérisé en ce que l'on utilise 0,05 à 0,9 mole de chlorure d'aluminium par mole d'arène et 1 à 3 moles de chlorure alcalin finement broyé comme complexant par mole de

chlorure d'aluminium.

2. Procédé selon la revendication 1, caractérisé en ce que l'on utilise le chlorure alcalin finement broyé sous forme de particules de dimensions inférieures à 0,25 mm, de préférence inférieures à 0,08 mm.

TABELLE

| Beispiel | Einsatzmengen | | | | | | | | Molverhältnis $C_6H_6$ : $AlCl_3$ | Molverhältnis NaCl : $AlCl_3$ |
|---|---|---|---|---|---|---|---|---|---|---|
| | $PCl_3$ (g) | $PCl_3$ (mol) | $C_6H_6$ (g) | $C_6H_6$ (mol) | $AlCl_3$ (98 %ig) (g) | $AlCl_3$ (98 %ig) (mol) | NaCl (g) | NaCl (mol) | | |
| 2 | 8800 | 64 | 780 | 10 | 680 | 5 | 497 | 8,5 | 2 : 1 | 1,7 |
| 3 | 11000 | 80 | 1170 | 15 | 680 | 5 | 497 | 8,5 | 3 : 1 | 1,7 |
| 4 | 11000 | 80 | 1560 | 20 | 545 | 4 | 351 | 6 | 5 : 1 | 1,5 |
| 5 | 11000 | 80 | 1560 | 20 | 272 | 2 | 175 | 3 | 10 : 1 | 1,5 |
| 6 | 11000 | 80 | 1560 | 20 | 136 | 1 | 70 | 1,2 | 20 : 1 | 1,2 |
| | | | | | | | $POCl_3$ | | | $C_6H_6$:$POCl_3$ |
| 1 (Vergleichsbeispiel) | 8800 | 64 | 780 | 10 | 1361 | 10 | 1535 | 10 | 1 : 1 | 1,0 |

| Beispiel | Ausbeute $C_6H_5PCl_2$ | | | | Einsatz (g) $AlCl_3$ + NaCl je 100 g $C_6H_5PCl_2$ |
|---|---|---|---|---|---|
| | (g) | (mol) | g je 1 g $AlCl_3$ | mol je 1 mol $AlCl_3$ | |
| 2 | 1250 | 6,98 | 1,83 | 1,40 | 94,16 |
| 3 | 1472 | 8,22 | 2,16 | 1,65 | 81,6 |
| 4 | 1636 | 9,14 | 3,00 | 2,28 | 54,7 |
| 5 | 1138 | 6,35 | 4,18 | 3,18 | 39,3 |
| 6 | 751 | 4,20 | 5,52 | 4,20 | 27,4 |
| 1 (Vergleichsbeispiel) | 1561 | 8,72 | 1,15 | 0,87 | $AlCl_3$ + $POCl_3$ 185,5 |

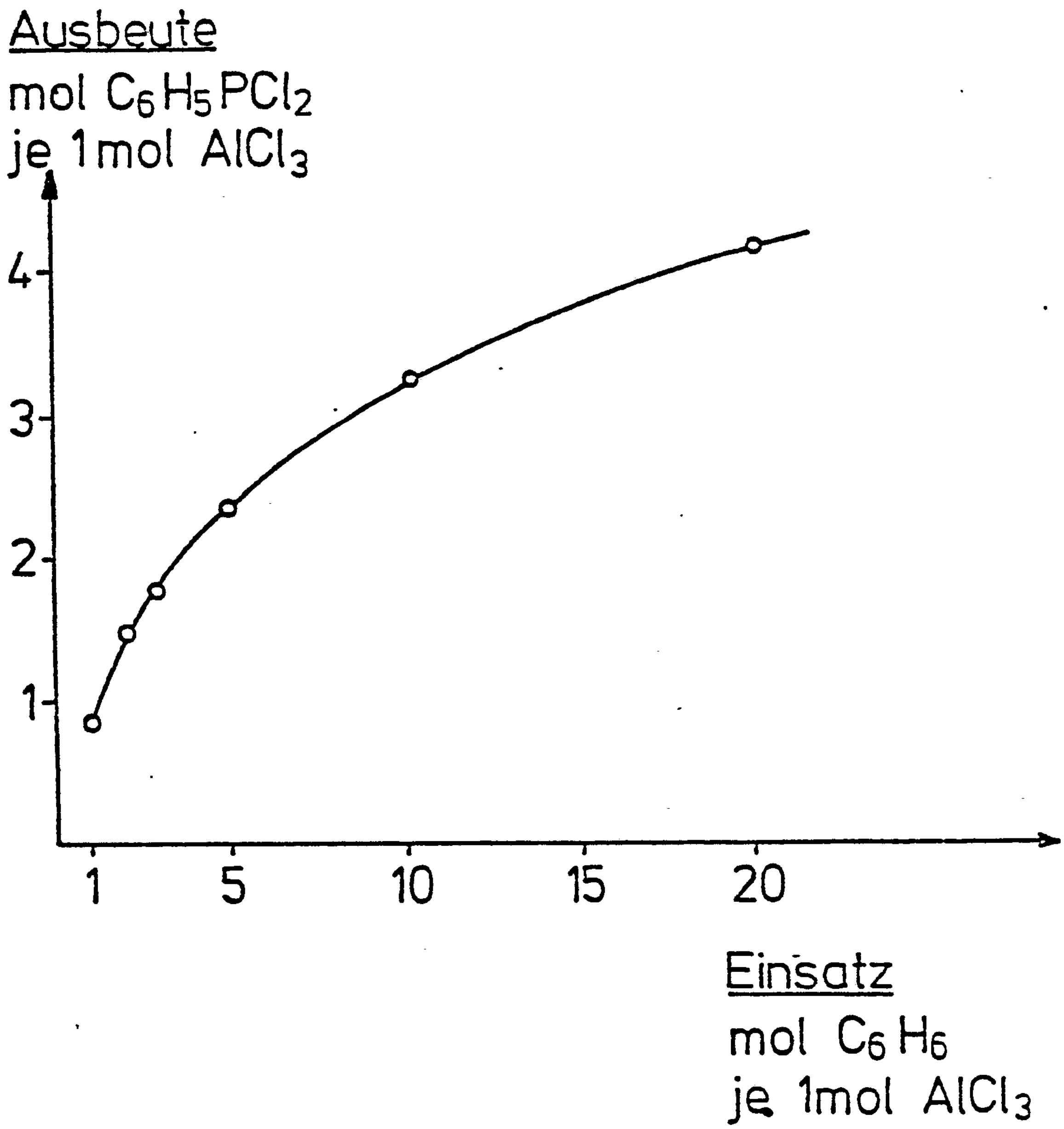
Ausbeute
mol $C_6H_5PCl_2$
je 1 mol $AlCl_3$
4
3
2
1
1
5
10
15
20
Einsatz
mol $C_6H_6$
je 1 mol $AlCl_3$